# EUROPEAN PATENT SPECIFICATION

(11) **EP 3 609 983 B1**
(45) Date of publication and mention of the grant of the patent: **14.10.2020**
(21) Application number: 18735423.8
(22) Date of filing: 04.04.2018
(51) Int. Cl.: C10G 3/00, C10G 1/00, A23K 10/37, A23L 19/00

(54) **PROCESS FOR SOLUBILIZING RESIDUES OF CITRUS FRUIT SQUEEZING**
VERFAHREN ZUR SOLUBILISIERUNG VON AUSPRESSRESTEN VON ZITRUSFRÜCHTEN
TRAITEMENT DE SOLUBILISATION DE RÉSIDUS DE PRESSAGE DE FRUITS D'AGRUMES

(30) Priority: 13.04.2017 IT 201700041095
(43) Date of publication of application: 19.02.2020
(73) Proprietor: Universita' Degli Studi Dl Messina, 98122 Messina (IT)
(72) Inventor: VISCO, Annamaria, 98122 Messina (IT); ESPRO, Claudia, 98122 Messina (IT); GALVAGNO, Antonio, 98122 Messina (IT); LICANDRO, Gianvincenzo, 98122 Messina (IT); MARINI, Silva, 98122 Messina (IT)
(74) Representative: Ghirardi, Valeria
(86) International application number: PCT/IT2018/000049
(87) International publication number: WO 2018/189757

(56) References cited:
- BICU IOAN ET AL: "Optimization of isolation of cellulose from orange peel using sodium hydroxide and chelating agents", CARBOHYDRATE POLYMERS, vol. 98, no. 1, 15 October 2013 (2013-10-15), pages 341-348, XP028700357, ISSN: 0144-8617, DOI: 10.1016/J.CARBPOL.2013.06.009
- PAUL MADUS EJIKEME: "Investigation of the physicochemical properties of microcrystalline cellulose from agricultural wastes I: orange mesocarp", CELLULOSE, KLUWER ACADEMIC PUBLISHERS (DORDRECHT), NL, vol. 15, no. 1, 9 August 2007 (2007-08-09) , pages 141-147, XP019570938, ISSN: 1572-882X

## Description

The present invention refers to a process for solubilizing residues of citrus fruit squeezing. In particular, the present invention refers to a process for the transformation of the exhausted citrus peels, for example those of orange, into an aqueous liquid product with low content in organic polluting load, easily purified or, alternatively, in a stable and storable product ready for all uses deriving from its composition (eg biomass). In particular, the present invention relates to a process for converting, with the aim of use or disposal, the solid waste from the orange processing industry into an aqueous liquid product. The waste, also called "citrus pulp", are the scraps of citrus fruit processing and consist mainly of exhausted peel, pulp and citrus seeds.

The transformation of this solid mass of vegetable origin into an aqueous liquid allows:
- disposal in the common biological waste water treatment plants, after removal of the intrinsic organic content;
- storage after concentration, as well as all possible uses deriving from its composition.

The latest Italian legislation introduces in Article 41-quater of Law no. 98/2013 the "Discipline of the Use of Citrus Pulp" in which the "citrus pulp" of citrus fruits is qualified as a by-product of the processing of citrus fruits for agricultural and zoo technical purposes and subtracting it definitively to the regulation of waste. Nevertheless, the disposal of the orange peel has today a series of drawbacks and is a critical point for companies (especially Italian) operating in the field. This is mainly due to the difficulty in utilizing orange peel as a by-product. In fact, unlike the lemon peel and lime that are mostly used for the pectin extraction, orange peels are not used for this purpose because of the low gelatinizing power of the pectin contained in them. Other uses are insignificant compared to the seasonal quantities produced accounting for a very small market share, such as the production of candied fruit. The high added value products deriving from the processing of oranges are the juice and the essential oil, while the most important derivative from a weight point of view is the non-edible part. In fact, the peel, together with the other processing waste, represents over 60% of the incoming fruit. The major constituent of citrus peel is water (85%), the remaining part consists mainly of carbohydrates (sugars, pectin, hemicellulose, cellulose) and small amounts of nitrogenous substances. The considerable volume characterizes the exhausted citrus peel as well as the high biodegradability that involves high rates of fermentation processes. Therefore, the disposal of this secondary product is a problem for the citrus industry. A viable technology for large companies such as those of USA and Brazil (about 20 million tons/year of processed oranges), consisting in the drying of orange peels until obtaining a product with residual humidity not higher than 10%, it is well known. The bulk of dried residues is marketed as a cattle feed. The low selling price and a relatively high expense of drying the citrus processing residues make cattle feed production an economically marginal part of the overall process. Alternative technologies well known for using the orange peels, involve the extraction of turbidity substances used for the preparation of non-alcoholic drinks at low juice content, such as lemonade and orange juice. This process entails a considerable increase in the humidity of the waste with a consequent increase in the volume of waste that affects negatively then on disposal costs. In addition, the waste materials are not palpable and has a very fine size complicating the management of the oven in a possible subsequent drying. Another known technique, which has not proved to be significantly valid, consists in carrying out enzymatic processes or microwave treatments on orange peels in order to extract the natural substances contained therein, such as: bioflavonoids, carotenoids and sugars. Even the attempt to obtain dietary fibres has not been a practical success either because of the high cost due to the presence of residues of the treatments performed on fruit both in the field (pesticides) and in the packing house (fungicides). Also the technology developed for the production of candied fruit, although economically viable, does not find application due to the small market demand. More recently, processes for the use of candied orange aimed at the production of biogas have been developed. In these processes the peels, used as biomass, are subjected to anaerobic digestion processes in fermentation plants. However, this application is not suitable for the residual presence of essential oils contained in the peel, which inhibit the biochemical process of digestion. For this reason, the amount of peel in a recipe must be non-predominant and its use must be "spread" in a longer time compared to those of the production of oranges which, in general, does not exceed four months. This requires a necessary storage of peel in equipped areas, which is not easy to manage. Another problem of this known process is caused by the high incidence of the cost of transport, being very few plants equipped with this technology. Therefore, the elimination of the exhausted peel, deriving from the industrial transformation of oranges, still remains a relevant issue, in particular for the Mediterranean citrus processing companies, not only in terms of costs (transfer to industrial collection centres, delivery to conveyors for sheep farming as fresh food, etc.), but also because of the impossibility of checking the actual final destination of these by-products in compliance with current legislation.

BICU IOAN ET AL: "Optimization of isolation of cellulose from orange peel using sodium hydroxide and chelating agents" discloses pulping citrus residue in aqueous NaOH at 98 °C during 240-360 min.

PAUL MADUS EJIKEME: "Investigation of the physicochemical properties of microcrystalline cellulose from agricultural wastes I: orange mesocarp" discloses digesting citrus residue in aqueous NaOH for 180 min at 80 °C.

Then, despite the numerous known technologies for reuse of "citrus pulp" (as fertilizer in agriculture, as animal feed, compost, as a source of high added value products, as a component in biogas production, etc.) none of these solutions has so far been able to effectively absorb the quantity produced, in particular, as regards the needs of the Mediterranean geographical areas.

Object of the present invention is solving the above drawbacks by providing a process for solubilizing residues of citrus juices, in particular orange peels, hereinafter indicated with the acronym (OP), resulting from the citrus processing industry, able to overcome the limits of the technologies so far proposed.

A further object is providing a process for solving the problems of disposal of (OP) through the implementation of an integrated process that consists in a first step of solubilizing the solid residue followed by a second step of catalytic oxidation of the substances dissolved in this solution. The process can be interrupted at the first stage or continued until the catalytic oxidation step. is to solve the above problems of the prior art by providing a by providing a process for solubilizing the residues of citrus fruit squeezing in which the first step consists in solubilizing the orange peels by means of a basic treatment at T = 150-250 °C and the second and the second step consists in the reduction of the pollutant load of peel previously solubilized by an oxidizing treatment in the presence of oxygen and of heterogeneous catalysts in bulk or supported on an inert support based on manganese and cerium (MnO2-CeO2, MnO2-CeO2-AC, etc.),at a temperature between 150 °C and 240 °C and an oxygen pressure between 9-27 bar.

The twofold purpose of the process for solubilizing citrus fruit juice residues of the invention is to convert the orange peel into a liquid aqueous product and subsequently to reduce its organic load in order to make such wastewater more suitable for disposal in sewage treatment plant. As an alternative the process can be stopped at the end of the first phase in which the transformation of the solid peel is realized in a water solution more easily manageable with respect to the starting solid.

This solution, characterized by a low decrease of the initial organic content, can be used as biomass for the production of biogas and biofuels. Moreover, if subjected to concentration by the current evaporators, gives rise to a stable product easily storable. Moreover, if subjected to concentration by the current evaporators, gives rise to a stable product easily storable. In the resulting product essential oils are virtually absent.

In the case in which the process continued until the catalytic oxidation phase, an aqueous solution close to neutrality is obtained, with a much lower organic load than that of the initial peel. The wastewater obtained can be started for biological purification without significantly harming the functionality of the plant. Also in this case essential oils are practically absent.

The above and other objects and advantages of the invention, as will appear from the following description, are achieved with a process for solubilizing the residues of the squeezing citrus fruits such as the one described in claim 1. Preferred embodiments and non-trivial variations of the present invention form the subject matter of the dependent claims. It is understood that all the attached claims form an integral part of the present description.

It will be immediately obvious that that many variations and modifications (for example relating to shape, dimensions, dispositions and parts with equivalent functionalities) can be made to that described without departing from the scope of protection of the invention as appears from the enclosed claims. The present invention will be better described by some preferred embodiments, provided for illustrative and not limitative, with reference to the attached drawings, in which:

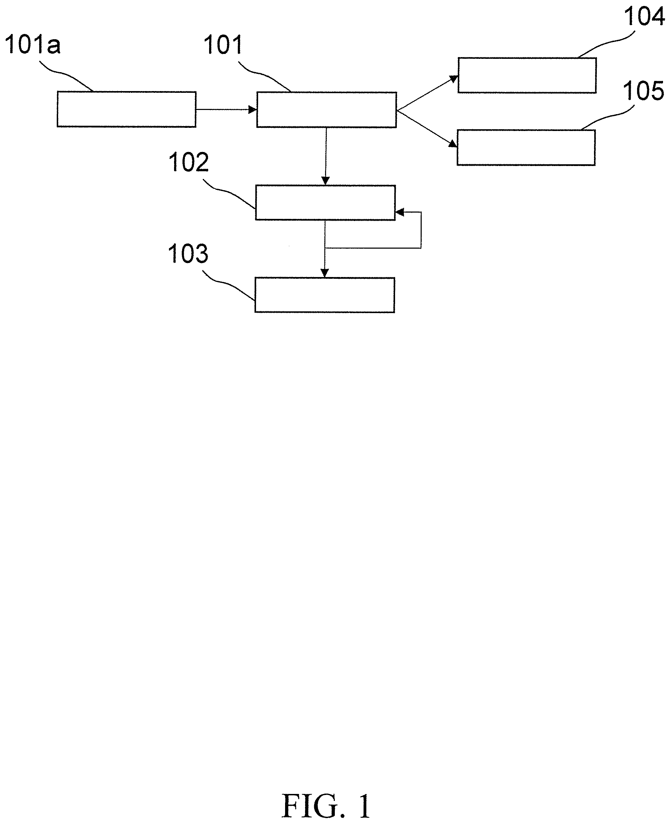

- FIG. 1 is a block diagram of the process for solubilizing the residues of the citrus fruit squeezing according to the present invention.

In the following description and in the subsequent claims, with the expression "residues of citrus fruit squeezing" abbreviated to (BA), it is intended to point out both fresh citrus peels, i.e. those directly recovered following the transformation of citrus fruits, in particular oranges, that all that is defined with the term "citrus pulp" in the prior state of the art. In the expression "residues of citrus fruit pressing" it is therefore intended to include not only the peels but also the peels with added waste resulting from all subsequent treatments of the same fresh peels in order to obtain derivatives and by-products through the processes of: shredding, extraction, enzymatic action, filtration, separation and clarification, and pulps deriving from the refining processes of juices and essential oils. With reference to the figure, a process for solubilizing citrus fruit squeezing residues comprises the following steps, developed after it has been consolidated by the Applicant that the grinding and mixing of the (OP) with the water does not involve the complete solubilizing of the same even at temperatures between 150 °C and 240 °C:
- a first step 101 of solubilizing of (OP) where the solubilizing occurs:
   i. by means of an optional primary treatment 101a of grinding of the (OP) in order to reduce them into smaller fragments compared to the initial ones;
   ii. by the addition of a basic aqueous solution (obtained by adding a base);
   iii. at a temperature between 150 and 240 °C;
   iv. with reaction times ranging from 3 to 24 hours;
      - a second phase 102 of catalytic oxidation of the (OP) solubilized in the previous step 101 where the catalytic oxidation takes place:
         i) in the presence of oxygen;
         ii) in the presence of at least one heterogeneous catalyst selected from the group consisting of mixed metal oxides and mixed metal oxides supported on inert support;
         iii) at a temperature between 150 and 240 °C;
         iv) at a pressure between 9 and 27 bar;
         v) and where step 102 can be repeated for N cycles, with N at least equal to 1.

In the present description, the term "disposal" of the (OP) means obtaining one or more of the following effects: solubilizing the (OP) in a basic aqueous solution, decrease of the organic load of the (OP) and upgrading of the biodegradability of (OP).

Mixed metal oxides means mixtures of different metal oxides. Preferred mixed metal oxides are CeO₂-MnO₂, CeO₂-Fe₂O₃, ZnO-Fe₂O₃, CuO-ZnO.

In one embodiment of the process for solubilizing citrus fruit juice residues according to the invention, the mixed metal oxide is one or more of one of CeO₂-Fe₂O₃ and CeO₂-MnO₂, whose percentages are between 10% and 90% (limits included) for one of the two metals and between 90% and 10% (including limits) for the second of the two metals; Preferred reciprocal percentages are 50% of Ce and 50% of Fe or Mn. All the percentages indicated refer to 100% of the total moles of the metals present. Supported metal oxides means mixed metal oxides adsorbed and/or deposited on an inert support. The preferred inert support is activated carbon (AC). In every oxidation cycle N in step 102 involving the solubilized (OP) compounds following the previous step 101, it is possible to use only fresh heterogeneous catalyst, only recovered heterogeneous catalyst or their mixtures in any mutual percentage.

In the present description, the term "fresh heterogeneous catalyst" means the component not derived from a previous catalytic oxidation cycle. On the other hand, the "recovered heterogeneous catalyst" refers to the component recovered from a previous oxidation cycle. Raw material used and named as (OP) also includes citrus albedo and citrus flavedo. The (OP), before being solubilized, are subjected optionally to a grinding treatment 101a in order to reduce them into fragments of smaller size with respect to the initial ones. The mixed metal oxides, such as preferably CeO₂-MnO₂, can be obtained for example by co-precipitation, preferably at 80 °C, of at least one water-soluble compound for each of the metals present in the corresponding oxide to be prepared. Co-precipitation must take place from an alkaline aqueous solution at pH ranging from 8 to 14, preferably from 13 to 14.

In the context of the present description, the term "hydro-soluble compounds" indicates preferably water soluble salts of metal able of being converted into oxides with the precipitation in an alkaline environment. Examples of water-soluble salts for mixed metal oxides are CeCl₃x7H₂O, Ce (NO₃)₃x6H₂O and MnCl₂x4H₂O.

In the process for solubilizing the residues of the citrus squeezing of the invention, the alkaline environment can be obtained by using any water-soluble base, among which NaOH, KOH, NH₄OH, an organic base, preferably NaOH. For the preparation of mixed metal oxides it is possible to use starting hydro-soluble compounds in which the metal has an oxidation number equal to or different from that which it will have in the final oxide. Thus, for example, the manganese precursors are also salts in which the oxidation state of the metal is different from +4, preferably MnCl₂·4H₂O.

Preferably during co-precipitation the system is maintained under vigorous stirring.

Preferably the precipitate is subsequently left to digest, for example for a time equal to 20 hours.

In a preferred manner the precipitate is then washed, for example with distilled water, until disappearance of the anions present (such as nitrates and/or chlorides in the above mentioned examples of CeCl₃·7H₂O and Ce(NO₃)₃·6H₂O).

Preferably the washed precipitate is then activated by calcination at a temperature ranging between 80°C and 500°C, more preferably at 80°C, preferably for 48 hours and then advantageously milled.

Other features and advantages of the present invention will better apparent from the description of the following preferred embodiments, intended exclusively by way of non-limiting example.

In an embodiment of the process for solubilizing the residues of citrus fruit pressing according to the invention, the supported mixed metal oxides, such as preferably CeO₂-MnO₂/AC, can be obtained by the "incipient wetness" technique preferably carried out at room temperature. In a vessel containing the inert support, preferably activated carbon (AC), a solution containing the two metals precursor is added, preferably Ce(NO₃)₃ and Mn(NO₃)₂.

In a preferred manner, the impregnation of the inert carrier with the metals precursors is carried out in an ultrasonic bath in order to promote a better dispersion of the compounds, preferably for 1 hour.

Preferably, the two metals in the mixed metal oxide are present in atomic ratio equal to 1:1.

In a preferred way, the metal oxide is mixed, with respect to the inert support, in a percentage equal to 10%.

Preferably, after the impregnation of the inert carrier with the metals precursors, the catalyst is dried in air at a temperature between 50°C and 150°C, more preferably between 80°C and 100°C, still more preferably 100°C, for a time ranging between 12 and 24 hours, in a preferred way for 12 hours. In a preferred manner the catalyst dried is then activated via calcination in air at a temperature ranging between 100°C and 500°C, more preferably to 300°C, for 6 hours.

Other characteristics and advantages of the present invention will become better apparent from the description of the following preferred embodiments, intended exclusively by way of non-limiting example.

In an alternative process for solubilizing citrus fruit juice residues, not part of the present invention, the process itself can also be interrupted at the end of the first phase 101 of solubilizing the residues of citrus fruit (OP), followed by a phase 104 of use of the aqueous solution produced at the end of the first step 101 as biomass for the production of biogas and biofuels in conventional plants, or alternatively by a step 105 in which the aqueous solution produced at the end of the first phase 101 is subjected to concentration by evaporators to obtain a storable product.

The following are some examples of embodiments of the process for solubilizing the residues of the citrus fruit juicer according to the invention, wherein the solubilizing of (OP) (step 101) and the subsequent catalytic oxidation of (OP) solubilized (step 102), were carried out in a "batch-slurry" 316 stainless steel reactor, with a total volume of 300 ml, equipped with an internal stirring system, housing for temperature and pressure sensors, sampling valve for sampling of sample, an inlet gas inlet valve and a gas release valve to release the gas during or at the end of the process. Heating is carried out by an electric mantle.

To evaluate the effectiveness oxidizing treatment, before and after oxidation, the (OP) were analysed in terms of TOC and COD.

"TOC" means the total organic carbon content ("Total Organic Carbon"), a parameter that indicates the measurement of the amount of carbon bound in an organic compound. This parameter was used as an indicator of the level of advancement of the oxidation process.

"COD" means the chemical oxygen demand ("Chemical Oxygen Demand"), a parameter that indicates the total oxygen requirement of a wastewater, in this case the aqueous solution containing the solubilized (OP).

Table A lists some of the main characteristics of orange peel (flavedo and albedo).

**Table A. Chemical Characteristics of OP**

| PARAMETER | (%) |
|---|---|
| MONO-AND DI-SACCARIDES (glucose, fructose and sucrose) | 6-8 |
| POLYSACCARIDES (pectin, protopectin, cellulose and hemicellulose) | 1,5-3,1 |
| ORGANIC ACIDS | 0,5-1,5 |
| HUMIDITY | 83-87 |
| pH (on such) | 3,5-4,2 |

It should be noted that the orange peels, in addition to the compounds shown in Table 1, are constituted in little percentages by other substances with marked biological properties such as vitamins, flavonoids, amino acids, pigments, enzymes and mineral elements.

The value of the initial TOC of the various orange peels used in the solubilizing process is included in the range 36,000-45,000 ppm, while the COD value is included in the range 54,000-67,000 mgₒ₂/l.

During the experimentation, (OP) derived from several type of fresh orange fruits has been subjected to the solubilizing process and subsequent oxidising catalytic treatment, after separation from the endocarp. The (OP) before the solubilizing process, were shredded into smaller fragments (<1 mm).

The amounts of substances used in the examples shown below were:
- with regard to the phase 101 of solubilizing the (OP), 20 g of (OP), previously crushed, were mixed with 20 ml of water and 2 g of 99% sodium hydroxide;
- with regard to the oxidation step 102, 0.5 g of the catalyst was added to the solution (36 ml) obtained in the first step 101 of solubilizing (OP) .

### Example 1

In this Example, (OP) solubilizing has been obtained in the presence of sodium hydroxide for a reaction time of 24 hours.

20g (OP) shredded, 20ml of water and 2g of 99% sodium hydroxide have been introduced into the reactor; the temperature has been increased up to 240°C. The system has been subjected to vigorous stirring (2.500 rpm) and the reaction has been carried out for 24 hours. Under these conditions it was possible to obtain a clear solution of dark colour without the presence of solid residues. Almost NaOH treatment involves a complete (OP) solubilizing.

Table 1 shows the initial and final values of TOC, COD and pH of the reaction mixture.

**Table 1. Results of (OP) solubilizing with NaOH**

| OP=20g | **TOC (ppm)** | | **COD (mgO₂/l)** | | **pH** | |
|---|---|---|---|---|---|---|
| H₂O=20ml | **initial** | **final** | **initial** | **final** | **initial** | **final** |
| NaOH=2g | | | | | | |
| **Time=24h** | 38.052 | 35.920 | 57.078 | 54.360 | 14 | 8 |

The test described in this example shows small changes between initial and final TOC and COD values. Instead, the pH value has been decreased from 14 to 8.

### Example 2

In the following Example 2, the test has been described which was carried out using the same process as reported in the Example 1, but applying a shorter reaction time (3 hours). This, in order to evaluate if the complete solubilizing of (OP) takes place also considerably reducing the reaction time.

We proceeded according to the process described in Example 1. 20 g (OP) shredded, 20 ml of water and 2g of 99% sodium hydroxide have been introduced into the reactor; the temperature has been increased up to 240°C. The system has been subjected to vigorous stirring (2.500 rpm) and the reaction has been carried out for 3 hours.

The initial and final values of TOC, COD and pH of reaction mixture are shown in Table 2.

**Table 2. Results of (OP) solubilizing with NaOH**

| OP=20g | **TOC (ppm)** | | **COD (mgO₂/l)** | | **pH** | |
|---|---|---|---|---|---|---|
| H₂O=20ml | **Initial** | **final** | **initial** | **final** | **initial** | **final** |
| NaOH=2g | | | | | | |
| **Time = 3h** | 39.093 | 38.140 | 58.460 | 56.980 | 14 | 10 |

Applying a shorter reaction time, it has been possible completely solubilizing the (OP). Similarly to what obtained in Example 1, even in these conditions it has been possible to obtain a limpid solution of dark color without the presence of solid residues.

The test shows that a reaction time of 3 hours is sufficient to completely solubilize (OP). Also in this case, there are a small changes between initial and final TOC and COD values. Instead, the pH value, at the end of the reaction, decrease from 14 to 10.

### Example 3

(OP) solubilizing and oxidation with NaOH and CeO₂-MnO₂ mixed in one spot reaction have been described.

20 g (OP) shredded, 20 ml of water and 2 g of 99% sodium hydroxide, 0,5 g of CeO₂-MnO₂ catalyst and oxygen up to a pressure of 9 bar have been introduced into the reactor. The system has been subjected to vigorous stirring (2.500 rpm), the temperature has been increased up to 240°C and the reaction has been carried out for 24 hours.

The initial and final values of TOC, COD and pH of reaction mixture have been shown in Table 3.

**Table 3. Results of (OP) solubilizing and oxidation in one spot reaction**

| OP=20g | **TOC(ppm)** | | **COD (mgO₂/l)** | | **pH** | |
|---|---|---|---|---|---|---|
| H₂O=20ml | **initial** | **final** | **initial** | **final** | **initial** | **final** |
| NaOH=2g | | | | | | |
| Cat.=0,5g | | | | | | |
| Reaction "one spot" | 35.869 | 24.870 | 54.347 | 38.805 | 14 | 8 |

A limpid solution of dark color with slight residue has been obtained with one spot reaction, due not only to the catalyst, but presumably also to a little part of the (OP) non-solubilized. The organic abatement in term of TOC and COD values it has been about 30%.

The obtained results have been demonstrated that the (OP) solubilizing process has been occurred using sodium hydroxide. In fact, a not relevant decrease of TOC and COD, but higher than two previous examples, it has been registered.

This result allows stating that the oxidation reaction using the catalyst has not been signified. The reason could be due to a premature pollution of the catalyst active sites caused by the presence of (OP) particles in the fragmentation phase.

Therefore, as will be shown in the following examples, in order to reducing the polluting load, the process must will be carried out in two phases: a first step (101) of solubilising residuals of squeezing citrus fruits (OP) and a second step (102) of organic compounds catalytic oxidizing reaction.

### Example 4

The catalytic oxidation of the reaction mixture containing the (OP) using CeO₂-MnO₂ it has been described. The (OP) have been solubilized following sodium hydroxide treatment as reported in example 1.

0.5 g of CeO₂-MnO₂ catalyst have been added into the reactor with 36 ml of liquid obtained from the solubilizing of (OP) according to the process described in Example 1 (reaction 1). It has been added oxygen until pressure 9 bar and the temperature has been increased up to 240°C. The system has been subjected to vigorous stirring (2.500 rpm) and the reaction has been carried out for 24 hours. (Reaction 2)

Subsequently, in order to further decrease the total organic carbon content of the solution, on the separated liquid from the catalyst, 0.5 g of new CeO₂-MnO₂ catalyst have been added and the above described process has been repeated: again it has been added oxygen until pressure 9 bar and the temperature has been increased up to 240°C (reaction 3).

The initial and final values of TOC, COD and pH of the solution before and after each reaction are shown in Table 4, respectively of: liquid containing the (OP) solubilized (reaction 1), solution subjected to a first catalytic cycle (reaction 2) and to a second catalytic cycle (reaction 3) with fresh catalyst.

**Table 4. Results of (OP) solubilized catalytic oxidation using CeO₂-MnO₂**

| OP=20g | **TOC (ppm)** | | **COD (mgO₂/l)** | | **pH** | |
|---|---|---|---|---|---|---|
| H₂O=20ml | | | | | | |
| NaOH=2g | **initial** | **final** | **initial** | **final** | **initial** | **final** |
| Cat.=0,5g | | | | | | |
| 1.Liquid (36ml) after reaction as described in example 1 | 43.052 | 41.240 | 62.078 | 59.360 | 14 | 8 |
| 2.Liquid reaction 1 + NEW CeO₂-MnO₂ (0,5g) | 41.240 | 11.050 | 59.360 | 15.075 | 8 | 7 |
| 3.Liquid reaction 2 + NEW CeO₂-MnO₂ (0,5g) | 11.050 | 905 | 15.075 | 1.357 | 7 | 7 |

Already after the first treatment with the catalyst (reaction 2), it has been observed a decrease of TOC and COD equal to about 73%, in comparison with the solution containing (OP) solubilized. While, after the second treatment (reaction 3), with another fresh catalyst, the reduction of the polluting load is almost total (98%).

The pH also decreases, going from strongly basic to neutral values.

At the end of the process, the catalyst can be easily separated from the reaction bath and reused as described in the following example 5.

### Example 5

The possibility of recycling CeO₂-MnO₂ catalyst maintaining its effectiveness has been described. The catalytic recyclability study has been consisted in the evaluation of the recovery processes of the catalyst after a reaction cycle, of the pre-treatment to which it must be subjected, and of the catalytic activity in successive reaction cycles. It has been proceeded according the process described in the example 4, but using the recovered catalyst in the two oxidation reactions, respectively, after 1 cycle and after 2 catalytic cycles. In particular, in the first oxidation reaction (reaction 2) the catalyst recovered from the reaction 3 of the example 4 has been used. While, in the second oxidation reaction, the catalyst recovered from the previous oxidation step described in the present example (reaction 3) has been used. The catalyst discharged after a catalytic cycle (example 4, reaction 3) has been subjected to drying in oven at a temperature of 90°C. Subsequently 0.48 g of this catalyst have been introduced into the reactor with the liquid (36 ml) obtained from the (OP) solubilizing as described in Example 1 (reaction 1). Then oxygen has been added up to a pressure of 9 bar and the temperature has been increased up to 240°C. The system has been subjected to vigorous stirring (2.500 rpm) and the reaction has been carried out for 24 hours (reaction 2).

Subsequently, on the obtained solution, this process has been repeated a second time: again oxygen has been added up to a pressure of 9 bar and the temperature has been increased up to 240°C. Ultimately, the recovered catalyst from the above described reaction has been used, then after two catalytic cycles, in order to further decrease the total organic carbon content of the solution (reaction 3).

The TOC, COD and pH values of the solution before and after each reaction are shown in Table 5, respectively of: liquid containing the (OP) solubilized (reaction 1), solution subjected to a first catalytic cycle (reaction 2) and to a second catalytic cycle (reaction 3) with recovered catalyst.

**Table 5. Results of catalytic oxidation of (OP) solubilized on CeO₂-MnO₂ - USED**

| OP=20g | **TOC (ppm)** | | **COD (mgO₂/l)** | | **pH** | |
|---|---|---|---|---|---|---|
| H₂O=20ml | | | | | | |
| NaOH=2g | **initial** | **final** | **initial** | **final** | **initial** | **final** |
| Cat.=0,5g | | | | | | |
| 1.Liquid (36ml) after described reaction in example 1 | 39.007 | 37.150 | 65.511 | 61.725 | 14 | 8 |
| 2. liquid reaction 2 + CeO₂-MnO₂ USED | 37.150 | 12.103 | 61.725 | 21.154 | 8 | 8 |
| 3. liquid reaction 3 + CeO₂-MnO₂ USED | 12.103 | 4.661 | 21.154 | 8.291 | 8 | 8 |

A TOC and COD decrease greater than 60% has been observed, respect to the solution containing the (OP) solubilized, already after the first treatment with the recovered catalyst (reaction 3, example 4) after one catalytic cycle.

While after the second treatment with the catalyst used after two catalytic cycles (reaction 3), the polluting load reduction is greater than 87%.

Also the pH decreases, going from strongly basic values to next to neutrality. The obtained results in terms of TOC and COD decrease demonstrate that the catalyst is recyclable after a simple drying treatment, even if the efficiency is slightly lower than the fresh catalyst (example 4). This behavior can be explained considering that the surface of the catalyst, with the increase of the oxidation cycles, is subjected to pollution phenomena which limit its efficiency. It should be noted that, in this case, the catalyst has been reused only after having subjected it to drying at 90°C without performing further regeneration treatments of the catalyst itself.

In fact, to restore the catalytic activity it is common practice, for the type of catalysts used, to subject the recovered catalyst to a regeneration step consisting of a calcination at a temperature between 100°C and 300°C for a time comprised within 1 hour and 4 hours.

According to what has been said, it is reasonable to assume that the efficiency of the catalyst recovered from a previous N oxidation cycle, can be further increased by subjecting the catalyst, before its reuse, to a further calcination step.

It is also to be considered that reaction 3 has been carried out by re-introducing oxygen at a pressure of 9 bar.

### Example 6

In this example, the catalytic oxidation of the reaction mixture containing the solubilized (OP) resulting from treatment with NaOH and in the presence of CeO₂-MnO₂ supported on activated carbon (AC), as described in Example 1 will be elucidated.

A mixture of 0.5 g of CeO₂-MnO/ AC catalyst and 36 ml of liquid obtained from the solubilizing of (OP) according to the process described in Example 1 (reaction 1), were added into the reactor under oxygen flow at 9 bar of pressure and the temperature was increased up to 240 °C.

The system has been kept under vigorous stirring (2.500rpm) and the reaction was carried out for 24 hours (reaction 2).

The process described above was repeated a second time (oxygen up to 9 bar, temperature up to 240 °C, time 24 hours)by using the same (reaction 3) .

Table 6 shows the TOC, COD and pH values of the solution before and after each reaction of the liquid solution containing solubilized (OP) (reaction 1), liquid solution resulting from the first catalytic step (reaction 2) and the liquid solution obtained after the second catalytic step by using recycled catalyst (reaction 3), respectively.

**Table 6. Results of catalytic oxidation on CeO₂-MnO₂/AC of solubilized (OP)**

| OP=20g | **TOC (ppm)** | | **COD (mgO₂/l)** | | **pH** | |
|---|---|---|---|---|---|---|
| H₂O=20ml | | | | | | |
| NaOH=2g | **initial** | **final** | **initial** | **final** | **initial** | **final** |
| Cat.=0,5g | | | | | | |
| 1.Liquid (36ml) after described reaction in example 1 | 38.140 | 36.322 | 56.207 | 53.483 | 14 | 8 |
| 2.Liquid reaction 1 + CeO₂-MnO₂/AC | 36.322 | 15.950 | 53.483 | 23.925 | 8 | 8 |
| 3.Liquid reaction 2 + CeO₂-MnO₂/AC (USED from reaction 2) | 15.950 | 5.583 | 23.925 | 7.774 | 8 | 8 |

With respect to the solution containing the solubilized (OP), a decrease in TOC and COD of about 56% is observed already after the first catalytic treatment (reaction 2). While, after the second treatment, by using the same catalyst (reaction 3), a reduction of the polluting load more than 85% has been observed.

In addition, a significant decrease of pH, going from strongly basic values to next to neutrality, has been obtained.

### Example 7

In this example, the catalytic oxidation of the reaction mixture containing the solubilized (OP) resulting from treatment with NaOH and in the presence of CeO2-MnO2 supported on activated carbon (AC), as described in Example 2, is shown.

A mixture of 0.5 g of CeO2-MnO/ AC catalyst and 36 ml of liquid obtained from the solubilizing of (OP) according to the process described in Example 2, were added into the reactor under oxygen flow at 9 bar of pressure and the temperature was increased up to 150 °C. The system has been kept under vigorous stirring (2.500rpm) and the reaction was carried out for 3 hours. Table 7 shows the TOC, COD and pH values of the solution before and after each reaction of the liquid solution containing solubilized (OP) as described in example 2 (reaction1), liquid solution resulting from the first catalytic step on fresh catalyst, respectively.

**Table 7. Results of catalytic oxidation on CeO2-MnO2/AC of solubilized (OP)**

| OP=20g | **TOC (ppm)** | | **COD (mgO₂/l)** | | **pH** | |
|---|---|---|---|---|---|---|
| H2O=20ml | | | | | | |
| NaOH=2g | **initia** | **final** | **initia** | **final** | **initia** | **final** |
| Cat.=0,5g | | | | | | |
| 1.Liquid (36ml) after described reaction in example 2 | 39.093 | 36.140 | 55.640 | 53910 | 14 | 10 |
| 2.Liquid reaction 1 + CeO2-MnO2/AC | 36.140 | 18.080 | 53.910 | 27670 | 10 | 9 |

By performing the catalytic oxidation reaction at a temperature of 150 °C and with a reaction time of 3 hours, only a TOC and COD decrease of about 50%, it is observed.

A slightly higher result (56%) was obtained after the first catalytic oxidation cycle carried out at a higher temperature and reaction time (t = 24 hours, T = 240 °C) (example 6).

### Example 8

The catalytic oxidation of the reaction mixture, diluted three times (1:3), containing the solubilized (OP) resulting from treatment with NaOH and in the presence of CeO2-MnO2 supported on activated carbon (AC), is described in order to evaluate the possibility of reducing the polluting load in a single catalytic cycle by increasing the oxygen pressure up to a maximum of 27 bar instead of the 9 bar used in all the examples described here.

The reaction liquid containing the solubilized (OP)and obtained after the treatment described in Example 2 was diluted 3 times in order to evaluate the possibility of reducing the pollutant load in a single catalytic cycle by increasing the oxygen pressure up to at a maximum of 27 bars instead of the 9 bars used in all the examples described. A mixture of 0.5 g of CeO2-MnO/ AC catalyst and 36 ml of diluted 3 times liquid obtained from the solubilizing of (OP) according to the process described in Example 2, were added into the reactor under oxygen flow at 9 bar of pressure and the temperature was increased up to 240 °C. The system has been kept under vigorous stirring (2.500rpm) and the reaction was carried out for 24 hours. Table 8 shows the TOC, COD and pH values of the solution before and after each reaction of the diluted 1:3 liquid solution containing solubilized (OP) (reaction 1), liquid solution resulting from the first catalytic step on fresh catalyst, respectively (reaction 2).

**Table 8. Results of catalytic oxidation of the (OP) solubilized 1:3 diluted solution on CeO₂-MnO₂/AC**

| | **TOC (ppm)** | | **COD (mgO₂/l)** | | **pH** | |
|---|---|---|---|---|---|---|
| | **initial** | **final** | **initial** | **final** | **initial** | **final** |
| 1.liquidd after reaction as described in example2 diluted 1:3 (36 ml) | - | 10.320 | - | 15.480 | 14 | 8 |
| 2.Liquid reaction 1 + CeO₂-MnO₂/AC | 10.320 | 1.583 | 15.480 | 2.374 | 8 | 8 |

Rus reported in Table 8 show that the removal of the polluting load of the solution containing the dissolved (OP) can be carried out by a single catalytic cycle.

In fact, the reduction of the organic load by dilution allows to obtain a reduction of the TOC and COD values equal to 84% compared to the initial values by using the same amount of oxidant.

On the basis of these results it is reasonable to hypothesize that the organic load of the solubilizing reaction of the (OP) shown in Example 2 can be significantly reduced by carrying out the catalytic oxidation reaction in a single cycle by increasing the oxygen pressure up to 27 bars.

## Claims

1. Process for solubilizing residuals from squeezing citrus fruits (BA) comprising:
• a first step (101) of solubilizing residuals of squeezing citrus fruits (BA), wherein the solubilizing occurs:
i) in a basic aqueous solution obtained through addition of an hydroxide or a basic salt;
ii) with different ratios between the amount of water and the amount of residuals of squeezing citrus fruits (BA);
iii) at a temperature included between 30°C and 350°C;
iv) with reaction times included between 3 hours and 24 hours;
• a second step (102) of catalytic oxidizing the residuals solubilized in the previous first step (101), wherein the catalytic oxidizing occurs:
v) at the presence of oxygen at a pressure included between 2 bar and 50 bar;
vi) at the presence of at least one heterogeneous catalyst selected from the group comprising mixed metallic oxides and mixed metallic oxides supported by an inert support;
vii) at a temperature included between 30°C and 350°C;
viii) with reaction times included between 3 hours and 24 hours;
ix) wherein step (102) is repeated for at least one cycle or for many cycles (N).

2. Process according to claim 1, **characterized in that**:
• the temperature of step (101) item iii) is included between 150°C and 240°C;
• the temperature of step (102) item vii) is included between 150°C and 240°C;
• the pressure of step (102) item v) is included between 9 bars and 27 bars.

3. Process according to claim 1 or 2, **characterized in that** the mixed metallic oxide is selected among CeO₂-Fe2O₃ and/or CeO₂-MnO₂ and their mixtures.

4. Process according to any one of the previous claims, **characterized in that** the mixed metallic oxide is supported on active carbons (AC) .

5. Process according to any one of the previous claims, **characterized in that** the mixed metallic oxide comprises two metals whose percentages are included between 10% and 90%, limits included, for one of the two metals and between 90% and 10%, limits included, for the second of the two metals, and where such percentages are referred to 100% of total moles of the two metals being present.

6. Process according to any one of the previous claims 3 to 5, **characterized in that** the mixed metallic oxide is CeO₂-MnO₂, the supported mixed metallic oxide is CeO₂-MnO₂/AC and where the mutual percentage moles of cerium and manganese are: 50% of Ce and 50% of Mn.

7. Process according to any one of the previous claims, **characterized in that**, for every cycle (N), the second step (102) is followed by the further steps:
- partly or totally recovering the heterogeneous catalyst used in the previous second step (102);
- drying the heterogeneous catalyst recovered in the previous second step (102) at a temperature included between 80 and 100C°, for a time included between 12 and 24 hours;
- re-using the heterogeneous catalyst recovered in the second step (102) in a new step (102) of a cycle (N+1) following the previous cycle (N).

8. Process according to any one of the previous claims, **characterized in that** the heterogeneous catalyst is selected among fresh heterogeneous catalyst and recovered heterogeneous catalyst and their mixtures in any mutual percentage.

9. Process according to any one of the previous claims, **characterized in that**, for every cycle (N), the first step (101) is preceded by a preliminary step (101a) comprising the mincing of the residuals of squeezing citrus fruits (BA) into thinned fragments.

10. Process according to any one of the previous claims, **characterized in that** it further comprises a step (103), following the second step (102), of addressing the oxidized, residuals of squeezing the citrus fruits (BA) to conventional biologic depurating plants.

## Patentansprüche

1. Verfahren zur Solubilisierung von Rückständen beim Auspressen von Zitrusfrüchten (BA), umfassend:
• einen ersten Schritt (101) zum Lösen von Rückständen beim Auspressen von Zitrusfrüchten (BA), wobei die Solubilisierung auftritt:
i) in einer basischen wässrigen Lösung, die durch Zugabe eines Hydroxids oder eines basischen Salzes erhalten wird;
ii) mit unterschiedlichen Verhältnissen zwischen der Menge von Wasser und der Menge von Rückständen beim Auspressen von Zitrusfrüchten (BA);
iii) bei einer Temperatur zwischen 30° C und 350° C;
iv) mit Reaktionszeiten zwischen 3 Stunden und 24 Stunden;
• einen zweiten Schritt (102) einer katalytischen Oxidation der im vorhergehenden ersten Schritt (101) gelösten Rückstände, wobei die katalytische Oxidation auftritt:
v) in Gegenwart von Sauerstoff bei einem Druck zwischen 2 bar und 50 bar;
vi) in Gegenwart von zumindest einem heterogenen Katalysator, der aus der Gruppe ausgewählt wird, die aus gemischten Metalloxiden und gemischten Metalloxiden auf einem inerten Träger besteht;
vii) bei einer Temperatur zwischen 30° C und 350° C;
viii) mit Reaktionszeiten zwischen 3 Stunden und 24 Stunden;
ix) wobei der Schritt (102) für zumindest einen Zyklus oder für viele Zyklen (N) wiederholt wird.

2. Verfahren nach Anspruch 1, **dadurch gekennzeichnet, dass**:
• die Temperatur von Schritt (101), Punkt iii) zwischen 150° C und 240° C liegt;
• die Temperatur von Schritt (102), Punkt vii) zwischen 150° C und 240° C liegt;
• der Druck von Schritt (102), Punkt v) zwischen 9 bar und 27 bar liegt.

3. Verfahren nach Anspruch 1 oder 2, **dadurch gekennzeichnet, dass** das gemischte Metalloxid unter CeO₂Fe₂O₃ und / oder CeO₂-MnO₂ und deren Gemischen ausgewählt wird.

4. Verfahren nach einem der vorhergehenden Ansprüche, **dadurch gekennzeichnet, dass** das gemischte Metalloxid auf Aktivkohle (AC) getragen wird.

5. Verfahren nach einem der vorhergehenden Ansprüche, **dadurch gekennzeichnet, dass** das gemischte Metalloxid zwei Metalle umfasst, deren Prozentsätze zwischen 10% und 90% liegen, einschließlich von Grenzwerten für eines der beiden Metalle, und zwischen 90% und 10% liegt, einschließlich von Grenzwerten für das zweite der beiden Metalle, und wobei solche Prozentsätze auf 100% der Gesamtmole der beiden vorhandenen Metalle bezogen sind.

6. Verfahren nach einem der vorhergehenden Ansprüche 3 bis 5, **dadurch gekennzeichnet, dass** das gemischte Metalloxid CeO₂-MnO₂ ist, das getragene gemischte Metalloxid CeO₂-MnO₂ / AC ist, und wobei die gegenseitigen Mol-Prozentsätze von Cerium und Mangan 50% Ce und 50% Mn betragen.

7. Verfahren gemäß einem der vorhergehenden Ansprüche, **dadurch gekennzeichnet, dass** dem zweiten Schritt (102) für jeden Zyklus (N) die weiteren Schritte folgen:
- teilweise oder vollständige Rückgewinnung des im vorhergehenden zweiten Schritt verwendeten heterogenen Katalysators (102);
- Trocknen des im vorhergehenden zweiten Schritt (102) zurückgewonnenen heterogenen Katalysators bei einer Temperatur zwischen 80° und 100° C für eine Zeitdauer zwischen 12 und 24 Stunden;
- Wiederverwendung des im zweiten Schritt (102) zurückgewonnenen heterogenen Katalysators in einem neuen Schritt (102) eines Zyklus (N + 1) nach dem vorhergehenden Zyklus (N).

8. Verfahren nach einem der vorhergehenden Ansprüche, **dadurch gekennzeichnet, dass** der heterogene Katalysator zwischen einem aktuellen heterogenen Katalysator und einem zurückgewonnenen heterogenen Katalysator und ihren Gemischen in einem beliebigen gegenseitigen Prozentsatz ausgewählt wird.

9. Verfahren nach einem der vorhergehenden Ansprüche, **dadurch gekennzeichnet, dass** dem ersten Schritt (101) für jeden Zyklus (N) ein vorläufiger Schritt (101a) vorausgeht, der das Zerkleinern der Reste beim Auspressen von Zitrusfrüchten (BA) in verdünnte Fragmente aufweist.

10. Prozess gemäß einem der vorhergehenden Ansprüche, **dadurch gekennzeichnet, dass** er ferner nach dem zweiten Schritt (102) einen Schritt (103) zum Anwenden der oxidierten Rückstände des Auspressens der Zitrusfrüchte (BA) bei herkömmlichen biologischen Reinigungspflanzen aufweist.

## Revendications

1. Procédé pour solubiliser des résidus de pressage d'agrumes (BA) comprenant:
• une première étape (101) de solubilisation de résidus de pressage d'agrumes (BA), où la solubilisation a lieu:
i) dans une solution aqueuse basique obtenue par addition d'un hydroxyde ou d'un sel basique;
ii) avec différents rapports entre la quantité d'eau et la quantité de résidus de pressage d'agrumes (BA);
iii) à une température incluse entre 30°C et 350°C;
iv) avec des temps de réaction inclus entre 3 heures et 24 heures;
• une seconde étape (102) d'oxydation catalytique des résidus solubilisés dans la première étape (101) précédente, où l'oxydation catalytique a lieu:
v) en présence d'oxygène à une pression incluse entre 2 bars et 50 bars;
vi) en présence d'au moins un catalyseur hétérogène choisi dans le groupe comprenant les oxydes métalliques mixtes et les oxydes métalliques mixtes supportés par un support inerte;
vii) à une température incluse entre 30°C et 350°C;
viii) avec des temps de réaction inclus entre 3 heures et 24 heures;
ix) où l'étape (102) est répétée pendant au moins un cycle ou pendant de nombreux cycles (N).

2. Procédé selon la revendication 1, **caractérisé en ce que**:
• la température de l'étape (101) point iii) est incluse entre 150°C et 240°C;
• la température de l'étape (102) point vii) est incluse entre 150°C et 240°C;
• la pression de l'étape (102) point v) est incluse entre 9 bars et 27 bars.

3. Procédé selon la revendication 1 ou 2, **caractérisé en ce que** l'oxyde métallique mixte est choisi parmi CeO₂-Fe₂O₃ et/ou CeO₂-MnO₂ et leurs mélanges.

4. Procédé selon l'une quelconque des revendications précédentes, **caractérisé en ce que** l'oxyde métallique mixte est supporté sur des charbons actifs (AC).

5. Procédé selon l'une quelconque des revendications précédentes, **caractérisé en ce que** l'oxyde métallique mixte comprend deux métaux dont les pourcentages sont inclus entre 10 et 90%, limites incluses, pour l'un des deux métaux et entre 90% et 10%, limites incluses, pour le second des deux métaux, et où de tels pourcentages sont rapportés à 100% de moles totales des deux métaux présents.

6. Procédé selon l'une quelconque des revendications 3 à 5 précédentes, **caractérisé en ce que** l'oxyde métallique mixte est CeO₂-MnO₂, l'oxyde métallique mixte supporté est CeO₂-MnO₂/AC et où les pourcentages mutuels en moles de cérium et de manganèse sont: 50% de Ce et 50% de Mn.

7. Procédé selon l'une quelconque des revendications précédentes, **caractérisé en ce que**, pour chaque cycle (N), la seconde étape (102) est suivie par les étapes supplémentaires:
- récupération partielle ou totale du catalyseur hétérogène utilisé dans la seconde étape (102) précédente;
- séchage du catalyseur hétérogène récupéré dans la seconde étape (102) précédente à une température incluse entre 80 et 100°C, pendant une durée incluse entre 12 et 24 heures;
- réutilisation du catalyseur hétérogène récupéré dans la seconde étape (102) dans une nouvelle étape (102) d'un cycle (N + 1) suivant le cycle (N) précédent.

8. Procédé selon l'une quelconque des revendications précédentes, **caractérisé en ce que** le catalyseur hétérogène est choisi parmi un catalyseur hétérogène frais et un catalyseur hétérogène récupéré et leurs mélanges en tout pourcentage mutuel.

9. Procédé selon l'une quelconque des revendications précédentes, **caractérisé en ce que**, pour chaque cycle (N), la première étape (101) est précédée par une étape préliminaire (101a) comprenant le hachage des résidus de pressage d'agrumes (BA) en fragments amincis.

10. Procédé selon l'une quelconque des revendications précédentes, **caractérisé en ce qu'**il comprend en outre une étape (103), suivant la seconde étape (102), d'envoi des résidus oxydés de pressage des agrumes (BA) à des installations d'épuration biologique conventionnelle.
